# EUROPEAN PATENT APPLICATION

(11) **EP 3 865 806 A1**
(43) Date of publication of application: **18.08.2021**
(21) Application number: 20156933.2
(22) Date of filing: 12.02.2020
(51) Int. Cl.: F28F 19/01, F28D 20/00

(54) **THERMAL ENERGY STORAGE DEVICE**

(71) Applicant: Siemens Gamesa Renewable Energy GmbH & Co. KG, 20097 Hamburg (DE)
(72) Inventor: EGGERS, Jan Rudolf, 21640 Bliedersdorf (DE)
(74) Representative: Aspacher, Karl-Georg

(57) **Abstract**

A heat storage (100) for a thermal energy storage plant comprises:
a hollow housing (110) comprising at least one housing wall (112) and at least two openings (101, 102) respectively defining an inlet and an outlet of the hollow housing (110),
a granular material (120) for storing heat housed in the hollow housing (110) between the inlet (101) and the outlet (102),
the hollow housing (110) defining a fluid passage (32) for the circulation of a heat transporting fluid between the at least two openings (101, 102) and through the granular material (120).

At least one of said openings (101, 102) is provided with a storage grate (11) for retaining the granular material (120) inside the hollow housing (110), the storage grate (11) including at least a first grate segment (11a, 11b) which is inclined or curved towards the granular material (120).

## Description

### Field of invention

The present invention relates to a storage device for storing thermal energy.

### Art Background

It is known to store fluctuating electrical energy as heat inside heat storages. The electrical energy may be generated in renewable and/or traditional power plants running on fossil fuels. The electrical energy from such plants is stored in heat storages when the electricity demand is low. The stored heat is reconverted back to electrical energy in times when the demand is higher than the production. The heat storages are usually part of thermal energy storage plants. A thermal storage plant may include for example a heater, a steam generator, a steam turbine, a heat transporting fluid, a storage material inside the heat storage and a piping system. The storage material may be a granular material, for example comprising a plurality of stones. The granular material is housed inside a hollow housing extending between an inlet and an outlet. The inlet and an outlet need to be open to allow the flowing of a heat transporting fluid, which exchanges heat with the granular material. It is known to provide grated structures at the inlet and outlet of the heat storage to contain the granular material inside the hollow housing of the heat storage. The thermo-mechanical forces originating from the storage material may require thick and heavy grated structures to be constructed to withstand such forces and contain the storage material inside the hollow housing. Thick and heavy grated structures may be associated with undesired manufacturing complexity, costs and weight of the heat storage. The choice of the grate material is also limited due to the high operating temperatures of the storage of around 750°C. Materials, i.e. metals, able to withstand these temperatures while retaining acceptable values in strength and other properties are expensive. As a result, these materials further contribute to raise the manufacturing costs, particularly for storages of great dimensions. Further, as energy storages get larger, the ceiling area and therefore the weight of the ceiling increase and need to be addressed to ensure stability of the energy storage.

There may be a need for providing a heat storage device having optimized grated structures, in order that the thermo-mechanical forces originating from the storage material are controlled as much as possible to avoid the above-mentioned inconveniences.

### Summary of the Invention

This need may be met by the subject matter according to the independent claim. Advantageous embodiments of the present invention are described by the dependent claims.

According to the invention there is provided a heat storage for a thermal energy storage plant, the heat storage comprising:
a hollow housing comprising at least one housing wall and at least two openings respectively defining an inlet and an outlet of the hollow housing,
a granular material for storing heat housed in the hollow housing between the inlet and the outlet,
the hollow housing defining a fluid passage for the circulation of a heat transporting fluid between the at least two openings and through the granular material,
wherein at least one of said openings is provided with a storage grate for retaining the granular material inside the hollow housing, the storage grate including at least a first grate segment extending between a first end attached to the housing wall and a second end distanced from the housing wall, the second end being closer than the first end to an intermediate section of the hollow housing interposed between the at least two openings, the intermediate section being orthogonal to the fluid passage.

As "granular material" it is meant any conglomerate of discrete solid elements or particles, for example stones or rocks, having a convenient thermal capacity for storing thermal energy at a desired temperature range. The discrete solid elements which constitute the granular material may a spheroidal shape or polyhedral shape, for example comprising a plurality of flat surfaces and/or curved surface. For example, the discrete solid elements may be crushed rocks of non-symmetrical random shapes. As "heat transporting fluid" it is meant any suitable fluid for transporting thermal energy, for example air.

The storage grates above described include at least a grate segment which extends from the first end attached to the housing wall to a second end into the granular material. Thus, the force of the granular material pushing against such grate segment compresses it and transfers the forces from the storage material to the storage walls and further to an external supporting structure attached to the heat storage, which in turn transfers the forces into the ground.

Storage grate according to the present invention can save material and therefore costs compared to a planar grate of the same size. This is due to a lower bending moment acting on the storage grate as a result of its shape, which results in a thinner storage grate. Further, the area through which air flows into the storage is increased substantially compared to a planar grate. Due to the increase in area, the flow velocity is reduced which in turn reduces the pressure loss. Material and therefore costs are also saved by the optimization of the grate thickness.

According to embodiments of the present invention, the storage grate may include a plurality of the above described grate segments. The storage grate may include a first grate segment and a second grate segment, having respective first ends attached to the housing wall and respective second ends attached to each other. Additionally, the storage grate may further include at least a third grate segment interposed between the first grate segment and the second grate segment. The third grate segment may be orthogonal to the fluid passage. According to other embodiments, the storage grate may be segmented in more than three segments.

According to embodiments of the present invention, at least one of the grate segments is planar. The grate segments are oriented at an angle between 0° and 90° with respect to the flow direction.

According to embodiments of the present invention, at least one of the grate segments is curved. The curvature of the different segments may be continuous at their connection points. According to embodiments of the present invention, the storage grate is configured as a single curved segment extending from two ends attached to the housing wall and oriented into the granular material inside the hollow housing.

According to embodiments of the present invention, the extension of the hollow housing in a direction perpendicular to the fluid passage is greater at the intermediate section than at the at least two openings, i.e. the heat storage has an increasing width downstream the inlet and/or upstream the outlet. In this embodiment the grate segments oriented at an angle to the flow direction allow air to be guided directly into the outer parts of the storage.

According to embodiments of the present invention, the heat storage comprises structural elongated elements attached to the storage grate and transversally oriented with respect to the fluid passage. Such elongated elements are beneficial for supporting the ceiling of heat storages, especially for large heat storages. Compared to a planar grate, the use on inward-oriented grates is more effective since the grate reaches further into the storage. Forces from the granular material can be transferred from the storage grate into the walls and further into an external supporting structure, which in turn transfers the forces into the ground. In embodiments comprising the structural elongated elements, the forces can also be transferred into the structural elongated elements and then further into an external supporting structure and possibly further into the ground.

According to embodiments of the present invention, the grate segments may be inclined when seen along a sectional horizontal plane and/or when seen along a sectional vertical plane.

The above described embodiments may be conveniently applied to heat storages where the fluid passage is horizontally oriented between the at least two openings. Alternatively, the above described embodiments may be conveniently applied to heat storages where the fluid passage is vertically oriented between the at least two openings.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Fig. 1: shows a schematic sectional view according to a horizontal sectional plane of a heat storage, according to a first exemplary embodiment of the present invention,
- Fig. 2: shows a schematic sectional view according to a horizontal sectional plane of a heat storage, according to a second exemplary embodiment of the present invention,
- Fig. 3: shows a schematic sectional view according to a horizontal sectional plane of a heat storage, according to a third exemplary embodiment of the present invention,
- Fig. 4: shows a schematic sectional view according to a horizontal sectional plane of a heat storage, according to a fourth exemplary embodiment of the present invention,
- Fig. 5: shows a schematic sectional view according to a horizontal sectional plane of a heat storage, according to a fifth exemplary embodiment of the present invention,
- Fig. 6: shows a schematic sectional view according to a vertical sectional plane of a heat storage, according to a sixth exemplary embodiment of the present invention,
- Fig. 7: shows a schematic sectional view according to a vertical sectional plane of a heat storage, according to a seventh exemplary embodiment of the present invention,

### Detailed Description

The illustrations in the drawings are schematic. It is noted that in different figures, similar or identical elements are provided with the same reference signs.

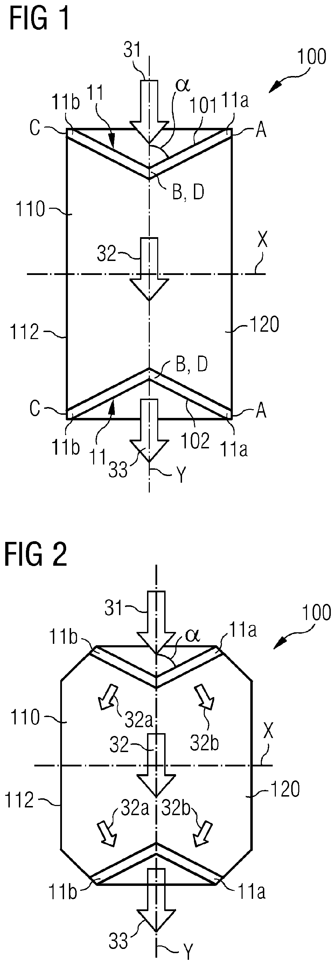

**Figure 1** schematically shows a horizontal heat storage 100 for a thermal energy storage plant (not shown as whole). The heat storage 100 comprises a hollow housing 110 extending longitudinally along a longitudinal axis Y. The hollow housing 110 comprises at least a housing wall 112. For example, the hollow housing 110 may be configured as a hollow cylinder having a cylindrical housing wall 112 coaxial with the longitudinal axis Y. Alternatively, the hollow housing 110 may comprise a plurality of housing walls 112, for example a bottom wall, a ceiling wall and a plurality of lateral walls connecting the bottom and the ceiling. The hollow housing 110 comprises a first opening 101 and a second opening 102 respectively defining an inlet and an outlet of the hollow housing 110, at the two opposite longitudinal ends of the hollow housing 110. According to other embodiments of the present invention (not shown) the hollow housing 110 comprises a plurality of inlet and/or outlet openings. A granular material 120 for storing heat is housed in the hollow housing 110 between the inlet 101 and the outlet 102. The granular material 120 comprises a plurality of discrete solid elements or particles, for example stones or rocks, having a convenient thermal capacity for storing thermal energy at a desired temperature range. The hollow housing 110 defines a fluid passage 32 for the circulation of a heat transporting fluid between the inlet 101 and the outlet 102 and through the granular material 120. The fluid passage 32 is mainly oriented along longitudinal axis Y. The heat transporting fluid may be air or any other fluid heat transfer medium. At the inlet 101 and the outlet 102 two storage grates 11 are respectively provided for retaining the granular material 120 inside the hollow housing 110, along the longitudinal direction Y. The granular material 120 is further retained inside the hollow housing 110 along a transversal direction by the housing wall(s) 112. The two storage grates 11 in figure 1 are identical. According to another embodiment of the present invention (not shown), the two storage grates 11 are different from each other. The heat transporting fluid enters the heat storage 100 at the inlet 101 (as indicated by the arrow 31 of figure 1), passes through the storage grate 11 at the inlet 101, further through the granular material 120 (as indicated by the arrow 32) passes through the second storage grate 11 at the outlet 102, leaving the heat storage 100 (as indicated by the arrow 33). Each of the storage grate 11 includes a first grate segment 11a extending between a first end A attached to the housing wall 112 and a second end B distanced from the housing wall 112. The second end B is closer than the first end A to an intermediate section X of the hollow housing 110 interposed between the inlet 101 and the outlet 102. The intermediate section X is a plane orthogonal to the longitudinal direction Y, i.e. to the fluid passage 32. In other words, the grate segment extends from the first end A attached to the housing wall 112 to the second end into the granular material 120. The intermediate section X represents a symmetry plane for the embodiment of figure 1, being the inlet 101 and the outlet 102 geometrically identical. Each of the two storage grates 11 in figure 1 further includes a second grate segment 11b extending between a first end C attached to the housing wall 112 and a second end D distanced from the housing wall 112. Similarly to the first grate segment 11a, the second end D of the second grate segment 11b is closer than the first end C of the second grate segment 11b to the intermediate section X. The first grate segment 11a and the second grate segment 11b are planar and inclined with respect to the longitudinal axis Y of an angle α comprised between 0° and 90°. The first grate segment 11a and the second grate segment 11b are symmetrical with respect to the longitudinal axis Y. The second end B of the first grate segment 11a and the second end D of the second grate segment 11b are attached to each other at a central position on the longitudinal axis Y. According to other embodiments of the present invention (not shown), the second end B of the first grate segment 11a and the second end D of the second grate segment 11b are attached to each other not at a central position on the longitudinal axis Y, i.e. the first grate segment 11a and the second grate segment 11b are not symmetrical with respect to the longitudinal axis Y

**Figure 2** schematically shows a second embodiment for a horizontal heat storage 100 according to the present invention.

The heat storage 100 of the second embodiment differentiates itself from the heat storage 100 of the first embodiment in that the extension of the hollow housing 110 in a direction perpendicular to the fluid passage 32 is greater at the intermediate section X than at the inlet 101 and at the outlet 102. In the second embodiment the heat storage 100 has an increasing width downstream the inlet 101 and upstream the outlet 102. The orientation of the first and second grate segments 11a, 11b allows the heat transporting fluid to be guided towards the lateral portions of the heat storage 100, closer to the housing walls 112, as shown in figure 2 by the lateral arrows 32a, 32b.

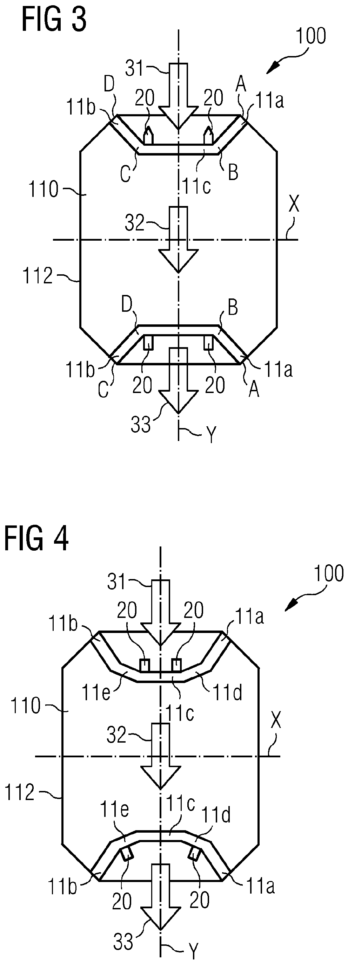

**Figure 3** schematically show a third embodiment for a horizontal heat storage 100 according to the present invention. The heat storage 100 of the third embodiment differentiates itself from the heat storage 100 of the second embodiment in that the storage grate 11 includes the first grate segment 11a, the second grate segment 11b and a third grate segment 11c interposed between the first grate segment 11a and the second grate segment 11b. The third grate segment 11c is attached to the second ends C, D of the first grate segment 11a and the second grate segment 11b. The third grate segment 11c is oriented perpendicular to the longitudinal axis Y. In this embodiment the heat storage 100 further comprises structural elongated elements 20 attached to the third grate segment 11c and transversally oriented with respect to the fluid passage 32. In a horizontal heat storage 100 structural elongated elements 20 are vertically oriented and may connect a ceiling portion to a bottom portion of the housing walls 112. The elongated elements 20 may be configured as columns working as stabilizing units for the storage grates 11. A portion of the force that is originating from the storage material 120 and then transferred to the storage grates 11 can be absorbed by the columns 20. The columns may further beneficial for supporting the ceiling of the heat storage 100 upstream the inlet 101 and downstream the outlet 102. The columns 20 can be optionally aerodynamically shaped in order to guide the heat transporting fluid, for example at the inlet 101 as shown in figure 3. This may reduce the potential losses induced by the columns 20 as a flow obstacle. According to other embodiments of the present invention (figure 4), the elongated elements 20 may be attached to other portions of the storage grate 11. The elongated elements 20 may be also attached to the first grate segment 11a or the second grate segment 11b.

**Figure 4** schematically show a fourth embodiment for a horizontal heat storage 100 according to the present invention. The heat storage 100 of the fourth embodiment differentiates itself from the heat storage 100 of the third embodiment in that each storage grate 11 comprises five grate segments 11a, 11b, 11c, 11d, 11e, i.e. in the fourth embodiment the storage grate 11 includes a further fourth grate segment 11d and a fifth grate segment 11e, respectively interposed between the first grate segment 11a and the third grate segment 11c and between the second grate segment 11b and the third grate segment 11c. At the inlet 101 two structural elongated elements 20 are both attached to the third grate 11c segment 11c while at the outlet 102 two structural elongated elements 20 are respectively attached to the fourth grate segment 11d and the fifth grate segments 11e.

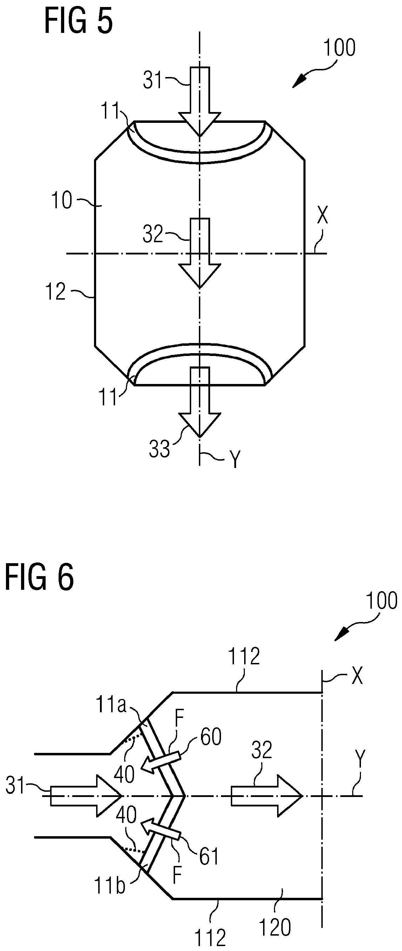

**Figure 5** schematically show a fifth embodiment for a horizontal heat storage 100 according to the present invention. The heat storage 100 of the fifth embodiment differentiates itself from the heat storage 100 of the other above-described embodiments in that the storage grate 11 comprises a single curved grate segments 11a extending between two ends, which are both attached to the housing wall 112. The storage grate 11 may be shaped as an arc, an ellipsis or other curved shape. According to embodiments of the present invention (not shown), the storage grate 11 may comprise a plurality of curved grate segments, attached together in a way similar to that shown for the planar grate segments in the above-described segments. According to other embodiments of the present invention, the storage grate 11 may comprise a plurality of curved and planar grate segments, together attached between two ends of the storage grate 11, which are both attached to the housing wall 112.

**Figure 6** schematically show a sixth embodiment for a heat storage 100 according to the present invention. The heat storage 100 of the sixth embodiment is shown in a vertical sectional plane. The storage grate 11 comprises a first grate segment 11a and a second grate segment 11b which are inclined in a vertical plane, respectively downwards and upwards. This determines that the upper first grate segment 11a is subject to a force 60 pointing downwards. This effect is beneficial because it is desirable that the force is transferred to the ground. The lower second grate segment 11b is subject to a force 61 pointing upwards. Optional beams 40 may be provided, which are meant to transfer forces 60, 61 from the grate 11 to the housing walls 112. The beams 40 are represented in figure 6 with respective dotted lines to indicate that the beams are not installed in a center plane of the heat storage 100, but more behind and/or in front of the center plane, closer to the housing walls 112.

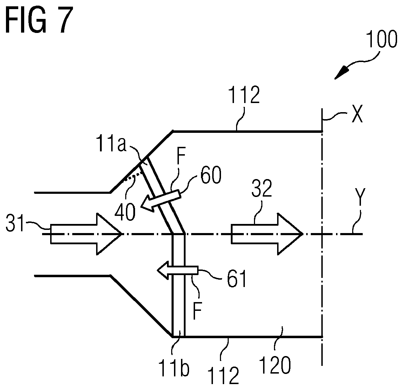

Alternatively, as shown in the further seventh embodiment of **Figure 7****,** the second grate segment 11b is disposed parallel to the intermediate section X. In this embodiment the force 61 is horizontally directed.

Embodiments of the present invention may result from a combination of the above-described embodiments, for example the storage grate 11 may be inclined in a horizontal plane (figures 1 to 5) and also in a vertical plane (figures 6 and 7)

The application of grates with the presented designs is not limited to horizontally oriented heat storages. In may also be used in storages where the flow direction is vertical. In such embodiment the openings may be horizontally oriented on the bottom side or vertical oriented but disposed on a side wall at the bottom of the storage. The inlet or outlet at the bottom of the storage would experience high forces as a result of the gravitational forces acting on the storage material. An inward-facing design would increase the stability of the grate in the same ways as in the embodiments described before.

## Claims

1. A heat storage (100) for a thermal energy storage plant, the heat storage (100) comprising:
a hollow housing (110) comprising at least one housing wall (112) and at least two openings (101, 102) respectively defining an inlet and an outlet of the hollow housing (110),
a granular material (120) for storing heat housed in the hollow housing (110) between the inlet (101) and the outlet (102),
the hollow housing (110) defining a fluid passage (32) for the circulation of a heat transporting fluid between the at least two openings (101, 102) and through the granular material (120),
wherein at least one of said openings (101, 102) is provided with a storage grate (11) for retaining the granular material (120) inside the hollow housing (110), wherein the storage grate (11) includes at least a first grate segment (11a, 11b) extending between a first end (A) attached to the housing wall (112) and a second end (B) distanced from the housing wall (112), the second end (B) being closer than the first end (A) to an intermediate section (X) of the hollow housing (110) interposed between the at least two openings (101, 102), the intermediate section (X) being orthogonal to the fluid passage (32).

2. The heat storage (100) according to claim 1, wherein the storage grate (11) includes said first grate segment (11a) and a second grate segment (11b) extending in a longitudinal section parallel to the fluid passage (32) between a first end (C) attached to the housing wall (112) and a second end (D) distanced from the housing wall (112), the second end (D) of the second grate segment (11b) being closer than the first end (C) of the second grate segment (11b) to the intermediate section (X).

3. The heat storage (100) according to claim 2, wherein the second end (B) of the first grate segment (11a) and the second end (D) of the second grate segment (11b) are attached to each other.

4. The heat storage (100) according to claim 2, wherein the storage grate (11) includes said first grate segment (11a) and said second grate segment (11b) and at least a third grate segment (11c, 11d, 11e) interposed between the first grate segment (11a) and the second grate segment (11b).

5. The heat storage (100) according to any of the previous claims, wherein at least one of the grate segments (11a, 11b, 11c, 11d, 11e) of the storage grate (11) is planar.

6. The heat storage (100) according to any of the previous claims, wherein at least one of the grate segments (11a, 11b, 11c, 11d, 11e) of the storage grate (11) is curved.

7. The heat storage (100) according to according to claim 1, wherein the storage grate (11) includes said first grate segment (11a) and a second grate segment (11b) extending between a first end (C) attached to the housing wall (112) and a second end (D) distanced from the housing wall (112), the second grate segment (11b) being parallel to the intermediate section (X).

8. The heat storage (100) according to according to any of the previous claims 2 to 7, wherein the fluid passage (32) is horizontally oriented between the at least two openings (101, 102) .

9. The heat storage (100) according to according to any of the previous claims 2 to 8, wherein the fluid passage (32) is vertically oriented between the at least two openings (101, 102) .

10. The heat storage (100) according to according to any of the previous claims, wherein the extension of the hollow housing (110) in a direction perpendicular to the fluid passage (32) is greater at the intermediate section (X) than at the at least two openings (101, 102).

11. The heat storage (100) according to any of the previous claims, wherein the storage grate (11) is provided at both the at least two openings (101, 102).

12. The heat storage (100) according to any of the previous claims, wherein the hollow housing (110) is symmetric with respect to the intermediate section (X).

13. The heat storage (100) according to any of the previous claims, wherein the heat storage (100) comprises structural elongated elements (20) attached to the storage grate (11) and transversally oriented with respect to the fluid passage (32) .

14. The heat storage (100) according to any of the previous claims, wherein the heat storage (100) comprises beams (40) provided between the storage grate (11) and the housing walls (112) for transferring forces (60, 61) from the storage grate (11) to the housing wall (112).
